# FASCICULE DE BREVET EUROPEEN

(11) **EP 3 469 287 B1**
(45) Date de publication et mention de la délivrance du brevet: **19.05.2021**
(21) Numéro de dépôt: 17735203.6
(22) Date de dépôt: 09.06.2017
(51) Int. Cl.: F28D 9/00, F28D 20/02, F28D 20/00

(54) **PROCEDE D'ECHANGE ET DE CONDITIONNEMENT D'UN ECHANGEUR THERMIQUE**
VERFAHREN ZUM WÄRMEAUSTAUSCH UND KONDITIONIERUNG EINES WÄRMETAUSCHERS
METHOD FOR HEAT EXCHANGE AND CONDITIONING OF A HEAT EXCHANGER

(30) Priorité: 10.06.2016 FR 1655393
(43) Date de publication de la demande: 17.04.2019
(73) Titulaire: Hutchinson, 75008 Paris (FR)
(72) Inventeur: CHOPARD, Fabrice, 38400 Saint Martin d'Heres (FR); CHAUVET, Boris, 45210 Ferrieres (FR)
(74) Mandataire: Ernest Gutmann - Yves Plasseraud S.A.S.
(86) Numéro de dépôt international: PCT/FR2017/051485
(87) Numéro de publication internationale: WO 2017/212201

(56) Documents cités:
- FR-A1- 3 025 596
- FR-A1- 3 025 873
- JP-A- 2006 226 628
- US-A1- 2010 223 949

## Description

La présente invention concerne le domaine de la gestion thermique.

Dans la technique il existe bien sûr des échangeurs thermiques.

Ainsi, les publications de demandes de brevet EP165179 et WO1989000664 proposent-t-elles respectivement un échangeur à plaques et un échangeur tubulaire.

Par ailleurs, FR3025873 pourrait être considéré comme se référant à un procédé d'échange thermique dans lequel :
- a) à un premier moment (T1), dans un stockeur d'énergie thermique, une énergie thermique au moins en partie préalablement accumulée, sous forme de calories, est déchargée vers un premier fluide, pour chauffer le premier fluide par cet échange thermique,
- b) puis, à un deuxième moment (T2) postérieur, alors que ledit premier fluide a, lors de l'étape a), été ainsi chauffé à une température supérieure à la température d'un deuxième fluide, le deuxième fluide reçoit une énergie calorifique par échange thermique avec ledit premier fluide qui circule alors de l'autre côté d'une première paroi qui empêche le premier fluide et le deuxième fluide de se mélanger.

Le stockeur d'énergie thermique comprend au moins un matériau à changement d'états.

Un problème demeure toutefois en liaison avec la capacité, sur des circuits où circule des fluides, à des températures différentes suivant les moments, à tirer utilement parti de cette situation pour une gestion thermique efficace invitant à :
- éviter de perdre inutilement l'énergie thermique dont ces fluides disposent, ne serait-ce que du fait de cette différence de températures, et/ou
- assurer à l'un au moins de ces fluides une gestion thermique qui l'amène à une température plus appropriée que celle(s) à laquelle(auxquelles) il circule à ce jour.

Il peut effet être typique qu'à un moment donné un premier fluide soit en situation de libérer, ou en nécessité d'avoir à libérer une énergie thermique dont ultérieurement un deuxième fluide peut avoir besoin, ou tout fluide, voire même lui-même.

En outre, par exemple sur un turbocompresseur ou sur un circuit d'huile de véhicule, la température à laquelle soit l'air dans le premier cas, soit l'huile dans le second, circule au moins à certains moments alors que le véhicule roule (et donc que son moteur fonctionne) n'est pas particulièrement adaptée en termes notamment de limitation des polluants ou de consommation de carburant.

C'est dans ce cadre qu'il est ici proposé un procédé d'échange thermique qui reprend les caractéristiques précitées en relation avec FR3025873 et dans lequel :
- ledit au moins un matériau à changement d'états contient, audit premier moment (T1) et sous forme de calories, l'énergie thermique au moins en partie préalablement accumulée qui est déchargée vers le premier fluide,
- ladite énergie thermique préalablement accumulée l'a été lors d'un précédent fonctionnement d'un moteur, au cours d'un précédent échange thermique avec le premier fluide qui était alors, là et au moment où s'est déroulé ledit échange thermique précédent, à une température supérieure à la température de changement d'états dudit au moins un matériau à changement d'états,
- et ce procédé est, sur un véhicule pourvu dudit moteur, mis en œuvre à un croisement entre :
   -- soit un premier circuit d'air du véhicule, l'air étant alors ledit premier fluide, et un second circuit d'eau du véhicule passant par un autre échangeur thermique du véhicule, l'eau étant alors ledit deuxième fluide,
   -- soit un premier circuit d'huile du véhicule, l'huile étant alors ledit premier fluide, et un second circuit d'un autre liquide du véhicule ayant un coefficient de transfert thermique supérieur à l'huile, ledit autre liquide étant alors le deuxième fluide.

On aura compris que les étapes a) et b) pourront être réalisées dans deux structures distinctes successives : une structure de stockage/restitution d'énergie thermique puis une structure échange thermique.

Quoi qu'il en soit pour réaliser ces étapes avec une performance et dans un volume compatible avec une application dans un véhicule (automobile notamment) avec une structure peu encombrante et aisée à contrôler thermiquement, on pourra préférer qu'audit deuxième moment (T2), la température à laquelle le premier fluide (3) a été chauffé soit supérieure à la température de changement d'états du (de l'un au moins de ce(s) matériau(x) MCP :
-- ledit au moins un matériau à changement d'états (MCP) se charge en énergie thermique par échange thermique avec le premier fluide dans le stockeur d'énergie thermique,
-- et que l'étape b) précitée soit alors réalisée.

Notamment deux cas de figures peuvent en outre se produire.
1. Dans le premier cas, on pourra souhaiter que, ladite première paroi étant pourvue dudit matériau MCP, on fasse circuler, le long de cette paroi, d'un premier côté le premier fluide et, d'un second côté, le deuxième fluide, simultanément, à partir (ou du moins lors) dudit deuxième moment (T2).

Une telle situation pourrait se rencontrer dans un cas d'une circulation d'air et d'eau sur un moteur turbocompressé.

A ce sujet, pour mettre en œuvre ledit procédé d'échange thermique, on le réalisera avantageusement, sur un véhicule, à un croisement entre un premier circuit de liquide (tel de l'eau passant par un autre échangeur thermique du véhicule) du véhicule, en tant que premier fluide, et un second circuit d'air du véhicule, en tant que deuxième fluide.

Ainsi, on combinera utilement les fonctions d'échangeur thermique et de stockeur d'énergie thermique.

Et dans l'application à un turbocompresseur, on pourra trouver utile que le second circuit d'air soit donc un circuit passant par un tel turbocompresseur puis par au moins une chambre de combustion de moteur équipant le véhicule.

En outre, dans cette application, un problème de mise en température de l'air avant le fonctionnement du turbo se pose typiquement.

Aussi est-il proposé qu'audit premier moment (T1), alors que le turbocompresseur est encore arrêté, on préchauffe de l'air arrivant dudit premier circuit d'air vers la(les) chambre(s) de combustion du moteur, en réalisant l'étape a), via ledit au moins un matériau MCP qui est alors à une température supérieure à sa température de changement d'états.

Par ailleurs, il est possible qu'alors les bénéfices thermiques liés à l'échange air/liquide (eau) doivent être affinés à certains moments, du fait des températures en jeu, et notamment en début de fonctionnement du moteur après un arrêt prolongé dans un environnement froid.

Ainsi est-il proposé qu'audit premier moment (T1) la circulation d'eau du second circuit d'eau vers là où se déroule ledit échange thermique entre l'air et ledit(l'un au moins des) matériau(x) MCP soit interrompue, de sorte qu'il n'y a alors pas d'échange thermique entre le premier et le deuxième fluides.

Par contre, on pourra utilement prévoir que, pendant le fonctionnement du turbocompresseur, audit deuxième moment (T2), l'étape b) de la revendication 1 soit réalisée à travers ladite première paroi pourvue dudit matériau MCP.

On associera alors dans cet échangeur les fonctions d'échange thermique et de stockage d'énergie thermique et on utilisera l'air chaud issu du turbo pour chauffer plus vite le liquide du premier circuit via le MCP.
2. Dans un second cas, donc dans une autre application liée à la motorisation du véhicule, on pourra souhaiter que, dans le stockeur d'énergie thermique, ledit matériau MCP équipant une deuxième paroi qui sépare, à l'écart de la première paroi, en plusieurs sous-flux un flux d'entrée du premier fluide, on fasse circuler le long de cette deuxième paroi, lesdits sous-flux :
- lors de l'étape a), à une température inférieure à la température de changement dudit matériau MCP,
- et, lors de l'étape b) à une température supérieure à la température dudit matériau MCP.

Ainsi, on chauffera à un moment ce premier fluide, puis on pourra le refroidir, tout en régénérant le MCP.

Dans ce second cas, on pourra par ailleurs juger utile de placer en échange thermique direct, sans interposition de MCP, les premier et deuxième fluides.

Ainsi, on pourra notamment prendre en compte la gestion thermique de l'huile (huile de transmission ou huile de boîte de vitesses) dans un cas d'une circulation avec échange huile/eau en particulier.

Et ceci pourra notamment être réalisé sur donc un véhicule pourvu d'un moteur, à un croisement entre un premier circuit d'huile du véhicule, en tant que premier fluide, et un second circuit d'un autre liquide du véhicule ayant un coefficient de transfert thermique supérieur, tel que de l'eau, en tant que deuxième fluide.

Dans une application, le premier circuit d'huile est un circuit de boîte de vitesses du véhicule. Une boîte automatique avec un grand volume d'huile pourra être privilégiée. Des utilisations sur véhicule à déplacement par moteur à combustion interne ou moteur électrique ou hybride (moteur à combustion interne et moteur électrique) sont possibles.

Une autre application pourrait concerner de l'huile destinée à une lubrification de moteur (sous-entendu de l'huile autre que de l'huile de boîte, donc ailleurs que dans cette boîte de vitesses).

Ainsi, on pourra trouver utile qu'audit premier moment (T1) :
- c) lors de l'étape a), de l'huile destinée à lubrifier ledit moteur et circulant dans ledit premier circuit d'huile du véhicule arrive dans le stockeur d'énergie thermique à une température inférieure à la température de changement d'états dudit au moins un matériau MCP,
- d) et qu'il n'y ait alors pas d'échange thermique entre le premier fluide et le deuxième fluide, la circulation dudit autre liquide du second circuit vers là où se déroulait ledit échange thermique entre ledit au moins matériau à changement d'états et le premier fluide étant alors interrompue alors que cet autre liquide circule, par ailleurs, ailleurs dans le moteur et s'y chauffe, en échange thermique avec des éléments (a priori fonctionnels) dudit moteur.

Et, pour tirer au mieux parti de la chaleur de l'huile après un certain temps de fonctionnement du moteur, et éviter qu'elle chauffe exagérément, il est proposé qu'après ladite étape c), on réalise l'étape b), en établissant la circulation dudit autre liquide du second circuit vers l'échange thermique avec ledit le premier fluide lorsque la température dudit autre liquide du second circuit est supérieure à la température du premier fluide arrivant pour ledit échange thermique.

En outre, pour favoriser l'efficacité des échanges dans un environnement typiquement exigu et soumis à de fortes contraintes thermiques (volume sous capot sur une automobile), il est proposé de réaliser une succession d'étapes a) et b) dans des étages d'échanges thermiques respectifs, différents entre eux et empilés pour se succéder suivant une direction.

Une autre problématique traitée a été celle liée à la performance thermique des échanges et stockages d'énergie et au rendement de l'installation prévue pour cela.

Aussi est-il par ailleurs proposé un procédé pour conditionner un échangeur thermique à capacité de stockage d'énergie thermique et y réaliser un échange d'énergie thermique, caractérisé en ce que :
- on dispose les étages d'échanges thermiques précités dans un boîtier isolant comprenant des parois isolantes pourvues de panneaux PIV contenant au moins un matériau isolant thermique,
- et, dans lesdits étages, on réalise le procédé d'échange précité, avec tout ou partie de ses caractéristiques.

Et, pour utiliser au mieux l'énergie thermique disponible à chaque fonctionnement du moteur, il est proposé ladite énergie thermique préalablement accumulée par le (dit au moins un) matériau MCP l'ait été lors d'un précédent fonctionnement dudit moteur concerné du véhicule, au cours d'un précédent échange thermique avec le premier fluide qui était alors, là et au moment où s'est déroulé l'échange thermique précédent, à une température supérieure à la température de changement d'états du(de l'un au moins desdits) matériau(x) MCP.

Dès lors que le temps et les conditions de fonctionnement de ce moteur auront été suffisantes pour que de l'énergie soit ainsi apportée au(x) MCP et donc stockée par eux, par changement d'état, cette énergie pourra être restituée au moins partiellement pendant un certain temps.

Un temps trop court présentera un intérêt moindre, un temps trop long pourra voir s'annuler ou réduire excessivement l'énergie stockée.

Aussi est-il conseillé d'établir un intervalle de temps compris entre 3 et 15 heures, de préférence entre 6 et 12 heures, entre ledit précédent fonctionnement du moteur du véhicule et au moins les étapes a) et b) ci-avant.

A toute fin, il est confirmé qu'un matériau à changement de phase - ou MCP ; PCM en anglais - désigne un matériau capable de changer d'état physique, par exemple entre liquide et solide, dans une plage de température comprise par exemple entre -50°C et 180°C. Le transfert de chaleur (ou transfert thermique) s'opère par utilisation de sa Chaleur Latente (CL) : le matériau peut alors stocker ou céder de l'énergie par simple changement d'état, tout en conservant une température sensiblement constante, celle du changement d'état.

Quant à l'expression « transversalement » ou « transversal(e) », elle a pour sens orienté(e) de façon transverse, pas nécessairement strictement perpendiculaire, par rapport à un axe ou une direction de référence.

Le(s) matériau(x) thermiquement isolant(s) ci-après mentionnés pourra(ont) être un isolant « simple » comme de la laine de verre, mais on préfèrera certainement une mousse, par exemple de polyuréthane ou de polyisocyanurate, ou encore plus favorablement un matériau thermiquement isolant poreux, voire nano-poreux, (ce qui inclus donc les mousses mais également les matériaux fibreux, tels que la laine de verre ou de roche) disposé dans une enveloppe sous vide, pour définir au moins un panneau isolant, PIV.

Par « PIV » (panneau isolant sous vide ; VIP en anglais), on entend une structure sous « atmosphère contrôlée », c'est-à-dire soit remplie par un gaz ayant une conductivité thermique inférieure à celle de l'air ambiant (26mW/m.K), soit en « dépression », donc sous une pression inférieure à la pression ambiante (donc < 10⁵Pa). Une pression entre 10⁻²Pa et 10⁴Pa dans l'enceinte pourra en particulier convenir. L'enceinte pourra contenir au moins un matériau isolant thermique a priori poreux (tailles de pores inférieures à 1 micron). Dans ce cas, la performance de la gestion thermique à assurer sera encore améliorée, voire le poids d'ensemble diminué par rapport à un autre isolant. L'atmosphère contrôlée obtenue pourra par exemple permettre d'abaisser la conductivité thermique à moins de 0,01/0,020 W/m·K environ dans les conditions d'utilisation.

Si nécessaire, l'invention sera encore mieux comprise et d'autres caractéristiques, détails et avantages de celle-ci apparaîtront encore à la lecture de la description qui suit, faite à titre d'exemple non limitatif et en référence aux dessins annexés, dans lesquels :
- la figure 1 est un schéma d'une application de l'invention à une solution qui peut être de type WCAC (Water cooled Charge Air Cooler/échangeur air-eau) dans le cas d'un moteur turbocompressé,
- les figures 2,3 sont des schémas qui reprennent une partie des circuits de la figure 1, avec un stockeur puis un échangeur thermiques, dissociés, comme cela est possible avec l'invention,
- les figures 5 et 13 sont au contraire des schémas d'échangeurs/stockeurs thermiques intégrés, aussi conformes à l'invention, en vues en arrachement, la figure 8 en étant une vue éclatée, avec disposition dans un boîtier isolant,

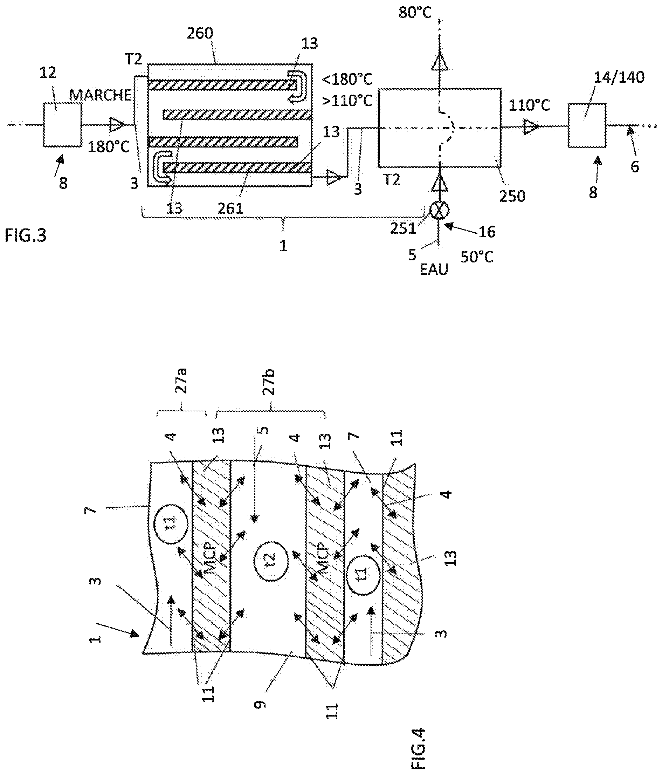

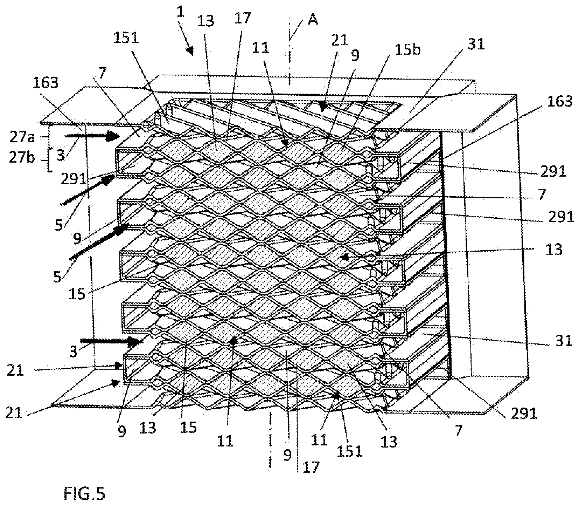

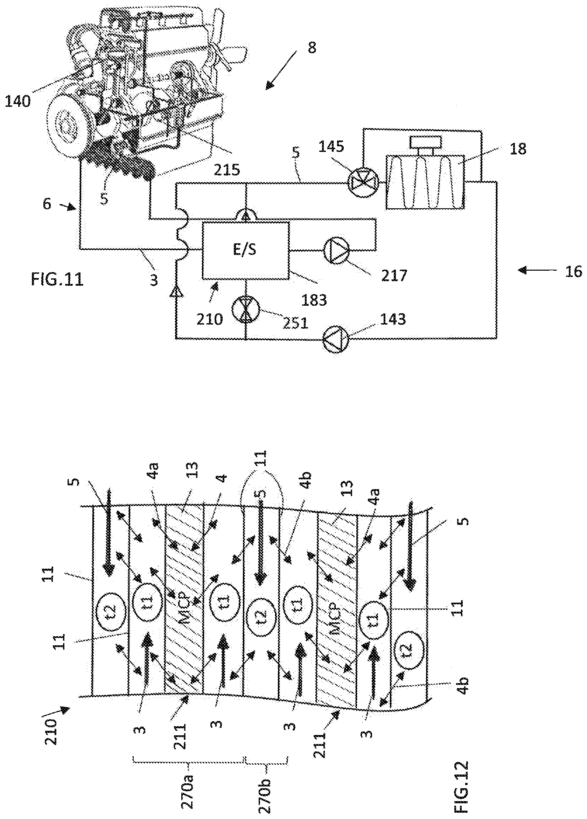

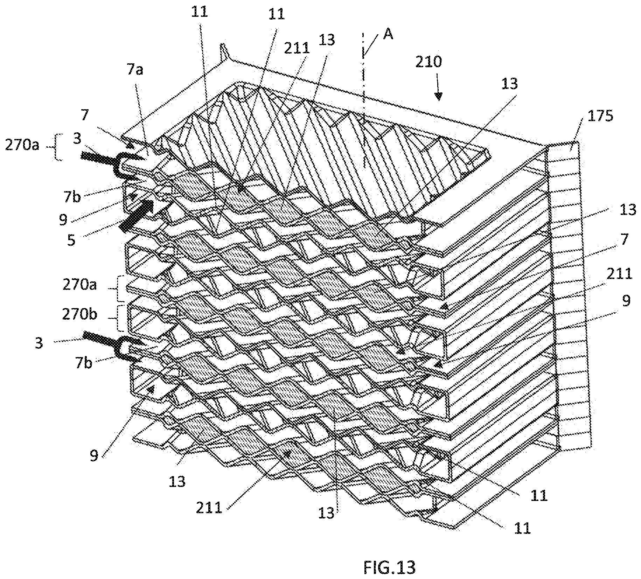

- les figures 4 et 12 schématisent un détail interne opérationnel des stockeurs/échangeurs d'énergie thermique des figures 5 et 13, respectivement,

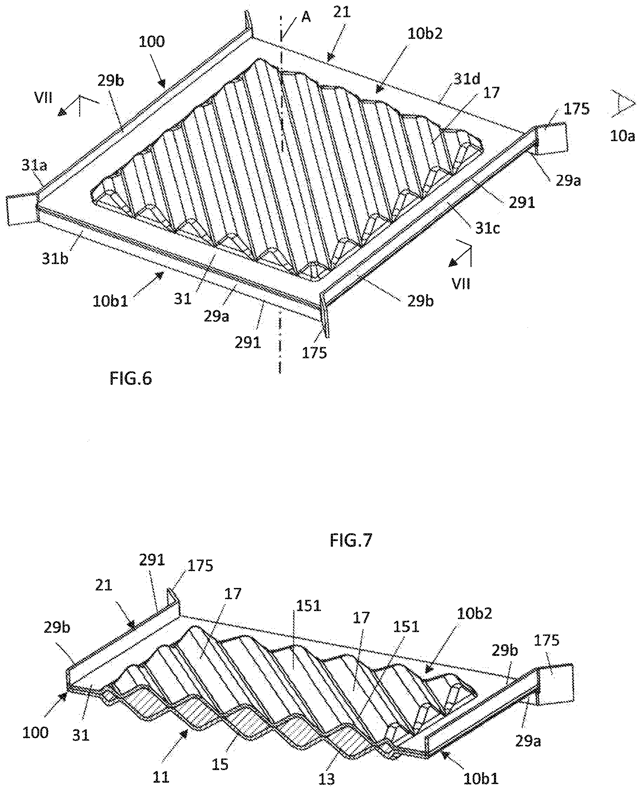

- les figures 6,7 montrent des vues d'un élément en forme générale de plaque polygonale pouvant définir en élévation la moitié d'un étage de ce stockeur/échangeur, la figure 7 étant une coupe suivant la ligne VII-VII,

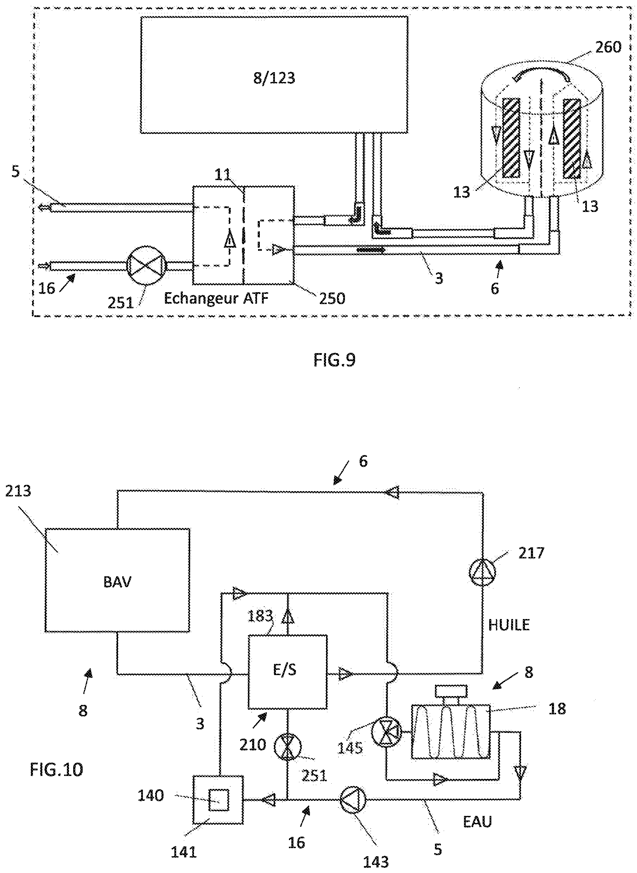

- la figure 9 est un schéma d'une autre application de l'invention à une solution qui peut être de type à échangeur ATF (Échange automatique de fluide) et stockeur thermique, de nouveau dissociés,
- les figures 10,11 montrent deux alternatives d'applications des solutions des figures 9 ou 13, respectivement sur une boîte de vitesses automatiques (BAV) et un circuit de lubrification moteur (paliers de bielles et de vilebrequin, arbre à cames...), avec échangeur huile/eau et stockeur thermique, et une structure possiblement comme celle de la figure 13, si l'on privilégie un échangeur/stockeur intégré, et

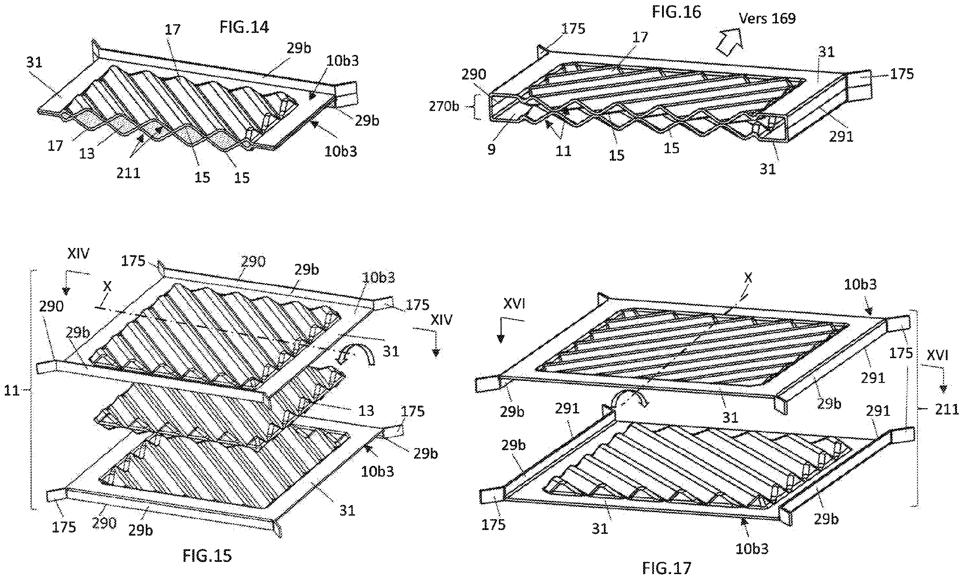

- les figures 14-46 montrent en perspective la manière de réaliser les éléments d'échange ou stockage pour les étages de cet échangeur/stockeur intégré, avec des vues en éclaté figures 15,17 et des coupes assemblées, suivant XIV-XIV et XVI-XVI, figures 14 et 16, respectivement.

Par souci de clarté, on va donc présenter ci-après deux cas privilégiés d'application des solutions ici proposées, dont un scindé en deux sous-cas, étant toutefois précisé qu'il ne s'agit que d'exemples et que les principes en cause peuvent s'appliquer à d'autres situations.

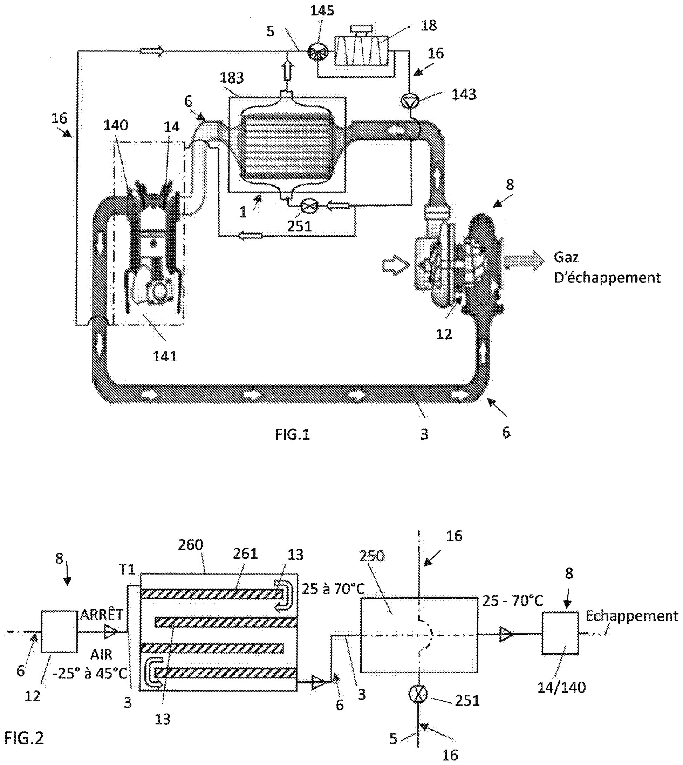

Intéressons-nous donc d'abord au cas des figures 1 à 8, puis nous verrons celui des figures 9 à17.

Le principe le plus abouti commun à ces cas est globalement schématisé tant figure 4 que figure 12.

Ces différents cas ont en effet comme points communs que :
- a) à un premier moment T1, dans un stockeur d'énergie thermique (repère 260 figure 2 ou 9, et repère 1 ou 210 figure 1,4,5,8,10-13), une énergie thermique au moins en partie préalablement accumulée est déchargée vers un premier fluide 3, par échange thermique,
- b) puis, à un deuxième moment T2 (voir aussi fig.3) postérieur au premier moment (T1), alors que ledit premier fluide 3 a été chauffé à une température t1 supérieure à la température t2 d'un deuxième fluide 5, ce deuxième fluide reçoit une énergie thermique par échange thermique avec ledit premier fluide qui circule alors de l'autre côté d'une première paroi 11 qui empêche le premier et le deuxième fluides 3,5 de se mélanger.

Dans les exemples ici présentés, le stockeur d'énergie thermique (qui est aussi un échangeur) présente des parois internes d'échanges dont au moins certaines contiennent au moins un matériau MCP 13. En alternative, il est possible, bien que jugé non préférable ici, d'utiliser un dispositif opérant sur la base de réactions thermochimiques réversibles que prévues dans la technologie TCS : (CaO/Ca(OH)2 ; oxydes métalliques -restructuration- ; sulfures ; voir http://energy.gov/sites/prod/files/2014/01/f6/tces_workshop_2013_sa ttler.pdf ).

Dans ce qui suit, un seul matériau MCP 13 a été schématisé et est cité. Il pourrait bien sûr y en avoir plusieurs ayant alors typiquement des températures de changement d'états (liquide/solide dans les exemples non limitatifs retenus) différentes.

Sur ces figures 4,12, les échanges thermiques entre premier et/ou deuxième fluides et/ou MCP se déroulent dans un échangeur/stockeur d'énergie unique, respectivement 1 et 210, dont on voit des illustrations figures 5 et 13, respectivement.

Toutefois les exemples que les figures 2,3 d'une part et 9 d'autre part montrent, prévoient des échangeurs de chaleur 250 séparés de stockeurs d'énergie thermique 260 et donc dans chaque cas, un moment T1 pour l'étape a) dans le stockeur 260 différent du moment T2 de l'étape b) dans l'échangeur 250, le premier fluide 3 passant dans l'un puis dans l'autre, comme montré.

Si l'on en vient maintenant au cas des figures 1-8, on notera d'abord qu'il s'agit de gérer thermiquement l'air, en tant que premier fluide 3, dans un circuit d'air 6 (figures 1-3), ceci dans le cadre de l'amélioration du fonctionnement d'un moteur 8 à combustion interne d'un véhicule pourvu d'un turbocompresseur 12 où passe le premier circuit 6 d'air avant que l'air passe par au moins une chambre de combustion 14, ici dans une série de cylindres 140 du moteur.

Pour mettre en œuvre la solution préconisée ci-avant, on va réaliser l'échange thermique (pour l'étape b) dans l'échangeur 250) à un croisement entre le premier circuit d'air 6 et un second circuit 16 du véhicule où circule de l'eau, en tant que deuxième fluide 5.

Pour le refroidissement de l'eau, le second circuit 16 passera avantageusement par un radiateur (ou autre échangeur thermique) 18 du véhicule. En effet, le second circuit 16 peut typiquement être le circuit de refroidissement du moteur qui assure la montée en température rapide du moteur et maintient une température de fonctionnement assez constante en évitant les surchauffes du moteur.

Deux phases de fonctionnement pourront être distinguées pour optimiser la gestion thermique de l'air 3.

En premier lieu, au premier moment T1 précité de fonctionnement du moteur 8, alors que le turbocompresseur 12 est encore arrêté, on pourra préchauffer de l'air arrivant du premier circuit d'air 6 vers le(s) chambre(s) de combustion 14.

On réalisera cela par échange thermique entre l'air 3 et le matériau MCP 13 qui sera alors à une température supérieure à sa température de changement d'états, de sorte qu'il déchargera de l'énergie vers l'air 3.

Ceci est schématisé figure 4 (étages 27b et 27a pour la partie montrée) dans le cadre d'un échangeur/stockeur intégré 1, mais pourrait aussi être réalisé dans le stockeur 260 suivi de l'échangeur air/liquide 250, comme montré figure 2.

Dans le stockeur 260, on trouve un ou plusieurs éléments 261 à matériau(x) MCP 13. Une disposition étagée, à étages décalés entre eux, de plusieurs tels éléments 261 créant une circulation à chicanes, par exemple comme montré, favoriserait le stockage d'énergie par augmentation des surfaces d'échange air 3 / matériau 13.

Comme déjà mentionné l'énergie thermique disponible dans le MCP 13 y aura été au moins en partie préalablement accumulée.

C'est là que va entrer en jeu la capacité de stockage du matériau MCP 13. En effet, cette énergie préalablement accumulée par ce matériau 13 pourra l'avoir été lors d'un précédent fonctionnement du moteur 8, au cours d'un précédent échange thermique avec le premier fluide 3 qui était alors, là et au moment où s'est déroulé cet échange thermique précédent, à une température supérieure à la température de changement d'états dudit matériau MCP 13.

Typiquement, ce « moment précédent » pourra correspondre à celui, du moment précité T2 de la figure 3, à ceci près que ce sera donc au cours d'un précédent fonctionnement du moteur 8.

En effet :
- autant au moment T1, avant le début du fonctionnement du turbo 12, alors que le moteur 8 est froid (ayant été arrêté pendant par exemple plusieurs heures), la température de l'air 3 (typiquement entre -25°C et 45°C) est inférieure à celle de liquéfaction du MCP 13 (par exemple de l'ordre de 60-70°C),
- autant quelques minutes plus tard (moment T2; par exemple entre 3 et 10mn après qu'on ait lancé ce moteur), le lancement du turbo 12 portera l'air 3 à environ 180°C, donc à une température suffisante pour si nécessaire (re)liquéfier le MCP 13 qui aura pu se solidifier à l'étape précédente.

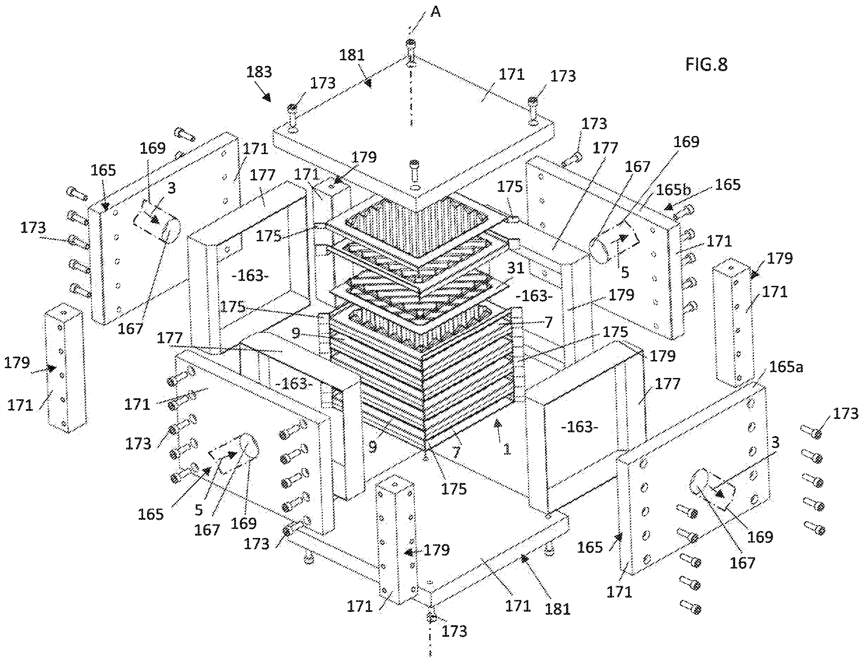

Ainsi, il suffira que le moteur 8 ait fonctionné quelques mns avec son turbo 12 lancé pour que le MCP 13 soit au-delà de sa température de liquéfaction, donc près pendant un certain temps à chauffer le fluide 3 (ici de l'air) au prochain démarrage moteur. Dans ce cadre, on notera qu'une bonne isolation thermique (voir à ce sujet la proposition des parois latérales 165 à panneaux PIV ci-après, en liaison avec la figure 8) pourra permettre de préserver ce stockage d'énergie pendant plusieurs heures, même véhicule parqué au froid (température négative en hiver), moteur 8 arrêté, jusqu'au démarrage suivant de ce moteur.

Pour favoriser d'une part le stockage d'énergie dans le matériau 13 et d'autre part sa préservation pendant plusieurs heures, y compris moteur 8 à l'arrêt, il est d'ailleurs ici conseillé que, comme le montrent ensemble les figures 4,5 et 8 :
- soit privilégiée la solution d'échangeur/stockeur intégré 1 (plutôt que les versions dissociées des figures 2,3),
- et qu'un tel échangeur/stockeur intégré 1 présente une succession d'étages tels 27a,27b (au moins trois a priori et de préférence entre 3 et 12) disposés dans un boîtier isolant 183 comprenant des parois ou des plaques isolantes 165,181 contenant au moins un matériau isolant thermique 171, et définissant de préférence des panneaux PIV,
- avec bien entendu les étapes précitées (a) et b)) d'échange et de stockage réalisées dans cet échangeur/stockeur intégré.

On notera que tel sera le cas aussi, de préférence, dans le cadre de l'application davantage détaillée ci-après d'une gestion thermique d'huile moteur, comme schématisé figures 12,13 et encore figure 8 qui s'applique à tous les types d'échangeur/stockeur intégrés ici concernés, tels donc ceux repérés 1et 210 figures 5,13 (voir la solution étagée, à étages 270a,270b figures 12,13).

Et dans tous les cas, au moins avec une telle solution à étages d'échanges et de stockages multiples et à isolation thermique périphérique assurée par isolants thermiques 171, on doit pouvoir établir un intervalle de temps de préservation de ladite énergie stockée dans le(s) matériau(x) 13 compris entre 3 et 15 heures, de préférence entre 6 et 12 heures, entre ledit précédent fonctionnement du moteur 8 et au moins les étapes a) et b) précitées. L'utilisation de matériau poreux (tels des aérogels) favorisera cela.

Si l'on revient maintenant à l'application turbo, il est prévu qu'au moins deux moments (T1 et T2) vont en particulier et en tout ou partie pouvoir bénéficier des caractéristiques de stockage et d'échange thermique précitées, avec les options de perfectionnements suivantes.

D'abord, comme montré figure 3 sur une solution de stockeur 260 et d'échangeur 250 dissociés (mais la solution intégrée à échangeur/stockeur intégré 1 est aussi concernée; voir figure 1) on pourra, audit premier moment (T1), alors que le turbocompresseur 12 est encore arrêté, préchauffer donc de l'air arrivant du premier circuit d'air 6 vers la(les) chambre(s) de combustion 14/140 du moteur 8, en réalisant l'étape a), via ledit matériau MCP 13 qui est alors à une température supérieure à sa température de changement d'états.

Passé ainsi de par exemple entre -25 et 45°C (froid sibérien ou chaleur du désert) à par exemple respectivement entre 25 et 70°C, cet air va pouvoir alimenter à une température favorable la(les) chambre(s) de combustion 14/140.

Pour éviter que cet air perde de la chaleur, on préférera qu'alors le possible échange premier/deuxième fluides 3/5 au croisement entre le premier circuit 6 d'air du véhicule et le second circuit 16 d'eau, ne soit pas réalisé, comme montré figure 2 où la vanne 251 en entrée de l'échangeur 250 est alors fermée.

Ainsi, lors dudit premier moment T1, la circulation d'eau du second circuit 16 vers la zone ici définie par l'échangeur 250 ou les étages tels 27a 27b sur l'échangeur/stockeur intégré 1 est interrompue, de sorte qu'il n'y a alors pas d'échange thermique entre les premier et deuxième fluides 3,5.

Par contre, dans un deuxième temps, au moment T2 de la figure 3, par ouverture de la vanne 251 (figure 3) et bien sûr sans que les deux fluides 3,5 se mélangent, la circulation d'eau du second circuit 16 vers la zone d'échange thermique entre l'air et l'eau va être établie et l'étape b) précitée se réaliser, à travers la paroi 11 pourvue dudit matériau MCP 13 dans le cas de la figure 4.

En effet, le fonctionnement du turbocompresseur 12 étant alors intervenu, ceci aura entraîné une montée en pression et en température (à plus de 150°C, typiquement vers 180°C) de l'air (du comburant) du premier circuit 6 qui sert donc à alimenter les cylindres 140.

Or, alimenter ces cylindres à de telles températures est inapproprié : contraintes thermiques trop élevées, chute de rendement... Le faire vers 100-130°C et de préférence vers 110°C est recherché.

Par ailleurs, le moteur 8 étant alors déjà en fonctionnement; depuis quelques minutes, avec donc son circuit 16 bien sûr actif, l'eau (en tant que liquide de refroidissement des parties concernées du moteur) sera déjà relativement chaude dans le circuit 16, même s'il fait froid alentour. En effet, par exemple un thermostat moteur 145 bien connu, alors fermé, aura pu contraindre l'eau à ne circuler que dans le moteur, sans donc temporairement de circulation dans le radiateur 18, dans l'exemple. Cette eau se sera ainsi rapidement réchauffée en circulant autour des cylindres 140 et dans la culasse 141 du moteur 8 avant de retourner à la pompe à eau 143 (voir figure 1).

Ainsi, on peut raisonnablement considérer une montée en température de l'eau jusqu'à 40-60°C à ce moment.

En conséquence, ce deuxième fluide 5 est au moment T2 à une température favorable (50°C sur la figure 3) pour faire baisser celle de l'air issu du turbo 12 en fonctionnement, après que (solution dissociée stockeur 260 puis échangeur 250) ou simultanément avec (dans la solution échangeur/stockeur intégré) une baisse de température de l'air du turbo, par la charge énergétique du MCP 13, puisque l'air du turbo est à une température beaucoup plus haute que la température de changement d'état du matériau 13.

On voit d'ailleurs figure 3 qu'on peut considérer qu' au moment T2, en sortie de turbo 12, l'air comprimé (par exemple vers 2-2.5 10⁵ Pa en pression absolue) est à une température de 170-190°C, alors qu'il descend vers 110°C après échange avec le matériau 13 puis l'eau, laquelle peut alors passer de 50°C à 80-85°C, avec donc au passage chargement du MCP 13. Ces températures favorables peuvent donc être aussi atteintes en sortie de l'échangeur/stockeur intégré, au même moment T2, étant rappelé que dans cette application, toute paroi 11 qui y sépare les fluides 3,5 est pourvue de matériau(x) MCP 13, de sorte qu'en fonction des moments et des températures en jeu entre celle de ses changements d'états et celles des fluides 3,5, ce matériau(x) se charge ou décharge en énergie thermique par échange thermique avec l'un et/ou l'autre des fluides 3,5.

C'est pourquoi on a repéré 4 figure 4 les doubles flèches qui entrent ou sortent de la couche MCP 13 de la paroi 11 pour indiquer que vis-à-vis des fluides 3 et 5 qui circulent d'un côté, respectivement de l'autre, de chaque paroi 11, le MCP reçoit de l'un ou l'autre, ou lui cède, de la chaleur.

Concernant la réalisation d'un échangeur/stockeur intégré 1, les figures 5-7 en donne un exemple.

Dans l'absolu, un tel échangeur/stockeur permet un échange d'énergie thermique entre un premier fluide 3 et un deuxième fluide 5, qui peuvent liquides et/ou gazeux respectivement.

L'échangeur 1 comprend :
- au moins un premier espace libre 7 pour le premier fluide et au moins un deuxième espace libre 9 pour le deuxième fluide, de telle sorte que ces premier et deuxième fluides s'écoulent dans les premier(s) et deuxième(s) espaces libres, respectivement,
- et au moins une paroi thermiquement conductrice 11 qui sépare entre eux deux espaces libres 7,9 adjacents, de telle sorte que l'échange de chaleur entre les fluides 3,5 ait lieu à travers la (chaque) paroi 11 concernée.

L'expression « au moins un ...espace libre » indique de cet espace peut être sous forme d'un ou plusieurs volumes.

La ou chaque paroi 11 est creuse et renferme un matériau 13 de stockage d'énergie thermique par accumulation de chaleur latente. Ce matériau va ainsi être, en échange thermique avec l'un et/ou l'autre des premier et deuxième fluides 3,5.

En tant que choix de ce type de matériau, on pourra prévoir une composition de caoutchouc telle que décrite dans EP2690137 ou dans EP2690141. Un matériau à base de paraffine, d'acide gras eutectique (myristique-caprique) ou de sel hydraté eutectique (chlorure de calcium + potassium) pourrait aussi être utilisé. En alternative, le matériau pourrait être à base d'acide gras, de paraffine, ou de sel eutectique ou hydraté. D'autres possibilités existent, comme un MCP imprégné dans un réseau poreux.

Revenant sur la structure de échangeur/stockeur 1, l'exemple des figures 5-7 montre que la, ou chaque paroi 11 présente de part et d'autre une succession de creux 15 où, intérieurement, sont disposées des parties telles 13a, 13b du matériau 13, et de bosses 17.

Les creux 15 se font avantageusement face, de sorte qu'individuellement les parties du MCP disposées dans ces creux sont engagées dans deux tels creux 15 qui se font face.

Pour favoriser une fabrication facile et en série, une réalisation des parois 11 avec des plaques 21, comme illustré notamment figures 6-7, pourra être très appropriée.

Les parois 11 pourront être réalisées par moulage, ou, si elles sont métalliques, par emboutissage.

Une solution à plaques 21 ondulées définissant des canaux allongés 151 formant les creux 15 permettra de guider le fluide 3 ou 5 considéré dans son espace libre de circulation 7 ou 9, suivant par exemple deux directions générales transversales l'une à l'autre à deux étages 27a,27b différents de échangeur/stockeur 1.

Ainsi, il sera aisé de construire un échangeur-stockeur 1 multi-étages à partir d'un type unique de modules élémentaires 100.

L'échangeur de chaleur 1 pourra en particulier être un échangeur à plaques, de telle sorte que les premier et deuxième fluides s'écoulent dans les premier(s) et deuxième(s) espaces libres, respectivement, de manière transversale ou parallèle l'un par rapport à l'autre, à travers l'échangeur.

Les étages de l'échangeur-stockeur 1 s'élèveront alors suivant une direction A perpendiculaire au plan général 10a des plaques alors parallèles entre elles.

Comme dans l'exemple des figures 6, 7, chaque module élémentaire 100 pourra être en forme générale de plaque polygonale (ici rectangulaire) comprenant :
- une première plaque 10b1 présentant périphériquement, sur tous ses bords, des rebords (ou bords pliés) 29a,29b alternativement dans un sens et en inverse sur deux côtés adjacents 31a,31b puis 31c, 31 d,
- une deuxième plaque 10b2 fixée avec la première plaque 10b1, engagée entre deux rebords opposés, 29b, de la première plaque,
- et donc le matériau MCP 13 interposé entre ces deux plaques 10b1,10b2.

Pour fixer ensemble les première et deuxième plaques 10b1,10b2, chacune présentera avantageusement, autour des creux 15 et bosses 17 au centre, un encadrement plan 31 continu.

Figures 5,8, on notera qu'avec un empilement suivant une direction A d'une succession étagée par exemple de tels éléments 100 :
- issus chacun de l'assemblage de première plaque 10b1, à rebords alternés 29a ou 29b sur tous les côtés (31a,31 b,31c,31d), avec une deuxième plaque 10b2,
- et disposés, d'un étage 27a au suivant 27b, avec une rotation relative de 180° autour d'un axe perpendiculaire à l'axe A,
   on va pouvoir, comme illustré notamment figure 5, par fixation entre elles des bords 291 des plis 29a,29b;31a,31b, créer étage après étage une succession d'espaces libres 7 puis 9 fermés sur deux côtés opposés avec, entre deux étages successifs, tels 27a,27b, la paroi creuse alvéolée 11 contenant du MCP.

Les fluides 3,5 passent, un étage sur deux, dans les espaces libres 7,9, suivant deux directions transversales, chacune perpendiculaire à l'axe A.

Et autour de cet empilement, qui dans l'exemple de la figure 8 offre six étages d'espaces libres au fluide 3 et cinq étages d'espaces libres au fluide 5, se dresse un volume collecteur 163 par face latérale.

Chaque volume collecteur 163 reçoit le fluide considéré, ici 3 ou 5, à faire passer dans les espaces libres 7 ou 9, ou venant d'y passer. Ainsi, chaque série d'étages d'espaces libres 7 (respectivement 9) communique en amont (par rapport au sens de circulation du fluide considéré) avec un premier volume collecteur 163 et, en aval, avec un second volume collecteur 163 situé en face latérale opposée.

Extérieurement, chaque volume collecteur 163 est limité par une paroi latérale 165. Chaque paroi latérale 165 sera de préférence traversée en 167 par un passage communiquant donc avec un volume collecteur 163, pour le raccordement à un conduit 169 d'alimentation ou d'évacuation de fluide.

Chaque paroi latérale 165 contiendra par ailleurs de préférence un matériau isolant thermique 171.

Entre deux faces latérales adjacentes, telles que 165a,165b, les volumes collecteurs 163 sont fluidiquement isolés entre eux.

Pour cela, chaque l'assemblage de première plaque 10b1 et deuxième plaque 10b2 comporte une languette débordante 175, dans chaque angle latéral (figures 6,7,8 notamment).

Pour l'étanchéité périphérique, et donc l'isolation entre les volumes collecteurs 163, une interface avec les parois latérales 165 est prévue. Plutôt qu'un engagement direct avec ces parois, il est proposé que les lignes axiales (ici donc verticales) de languettes 175 fixées entre elles s'engagent entre deux coins verticaux 179, par exemple chanfreinés, de cadres intermédiaires 177. Les cadres intermédiaires 177 seront alors interposés, latéralement, entre la pile d'éléments 100 et la paroi latérale 165 en regard.

Dans les angles latéraux, des piliers 179 se dressent axialement entre deux parois latérales 165 adjacentes, ou, comme dans l'exemple illustré, entre deux cadres intermédiaires 177 latéraux adjacents, le tout étant alors recouvert par les parois latérales 165.

Des moyens de fixation, tels que des vis 173, pourront solidariser le tout, en prise ici dans les parois latérales 165 et les piliers d'angle 179.

Transversalement à l'axe A, ici dessus et dessous, des plaques 181 de couvercle, pleines, participent à la fermeture, de préférence donc étanche et isolée thermiquement, des volumes collecteur 163.

Le tout assemblé et fixé, on obtient le boîtier 183 opérationnel en tant qu'échangeur/stockeur 1, avec une circulation interne de fluides.

Concernant les languettes 175, une réalisation prévoit, comme montré figures 6,7, de les former toutes, par élément 100, dans une première plaque 10b1, en profitant des extensions de biais (à 45° a priori, comme illustré) crées par deux bords adjacents alternés pliés, tels 29a,29b.

Sur la figure 13, on voit une alternative à la solution de la figure 5, particulièrement appliquée au cas d'une gestion thermique d'un circuit d'huile (en tant maintenant que premier circuit 6 pour le premier fluide 3) toujours sur un moteur 8 à combustion interne, avec échange thermique indirect avec le circuit d'eau (en tant que deuxième circuit 16 pour le deuxième fluide 5), dans l'hypothèse de nouveau d'une réalisation échangeur/stockeur intégré (maintenant repéré 210).

Dans ce cas, l'échangeur/stockeur, dont on ne voit pas ici le boîtier extérieur de conditionnement (avec les volumes collecteurs 163, les parois latérales 165 traversées par les conduits 169 d'alimentation et couvercles 181 de la figure 8), est adapté à ce que le premier espace libre 7 (étage 270a) soit, dans l'échangeur, scindé en au moins deux sous-conduits 7a,7b où peut circuler en même temps le (premier) fluide 3.

Entre les deux sous-conduits 7a,7b s'étend une paroi thermiquement conductrice 211 qui renferme le matériau MCP 13.

Ainsi, le fluide 3 va se scinder dans l'échangeur en deux flux parallèles (voir flèches figure 13), le matériau MCP 13 se chargeant en ou libérant de l'énergie thermique, en fonction de la température du fluide 3.

Tous les étages de l'échangeur 210 pourraient être comme l'étage 270a précité.

Dans l'application précitée de la gestion thermique d'un circuit d'huile, comme schématisé figures 9-11, on pourra toutefois trouver intérêt à ce qu'un second fluide 5 circule aussi dans l'échangeur/stockeur 210, en échange thermique avec le (premier) fluide 3 (étage 270b), sans mélange de ces flux et sans que ce second fluide 5 soit en échange thermique avec le MCP.

Il est pour cela proposé que l'échangeur/stockeur 210 comprenne :
- au moins un deuxième espace libre 9 pour le deuxième fluide 5, de telle sorte que lesdits premier et deuxième fluides 3,5 s'écoulent dans les premier(s) et deuxième(s) espaces libres, respectivement,
- une paroi 11 thermiquement conductrice, dépourvue de matériau à accumulation de chaleur, séparant entre eux deux premier et deuxième espaces libres 7,9 adjacents, de telle sorte que l'échange de chaleur entre les premier et deuxième fluides 3,5 à deux étages adjacents, successifs, 27a,27b ait lieu à travers cette paroi thermiquement conductrice « simple » 11.

Ainsi, entre deux sous-conduits 7a,7b, où circule le seul premier fluide 3, sera interposé un matériau MCP 13, tandis que tel ne sera pas le cas entre les deux premier et deuxième conduits 7,9 où circulent donc respectivement les premier et deuxième fluides 3,5, sans mélange, sensiblement transversalement l'un à l'autre.

En référence aux figures 14-17, on va maintenant présenter une manière de fabriquer les parois 11,211 de la figure 13.

La paroi 211 de la figure 14 est réalisée comme montré figure 15, à partir de deux plaques 10b3 identiques parallélépipédiques dont les deux bords opposés 29b sont pliés (à angle droit) dans un même sens.

Les deux plaques sont parallèles. Dans le plan général de chaque plaque, le cadre 31 entoure la partie centrale pourvue des creux 15 et bosses 17, ici encore en forme d'ondulations parallèles de biais, à la manière d'une tôle ondulée.

Entre les deux plaques 10b3 est interposé le matériau 13, dans les creux 15.

Pour l'assemblage, l'une des deux plaques est tournée de 180° par rapport à l'autre, autour de l'axe X passant par les deux bords opposés non pliés, avec les bords 29b dos à dos. On les assemble alors de façon étanche à l'air (soudure typiquement), par leurs cadres 31 appliqués l'un contre l'autre, après interposition du matériau 13, de façon à obtenir la double paroi 11 de la figure 11.

La paroi 11 de la figure 16 est réalisée comme montré figure 17, à partir des deux plaques 10b3 à bords opposés identiquement pliés 29b.

Rien n'est interposé entre les deux plaques 10b3 parallèles.

Pour l'assemblage, l'une des deux plaques est de nouveau tournée de 180° par rapport à l'autre, autour de l'axe X passant par les deux bords opposés non plié, avec les bords 29b face à face. On les assemble alors de façon étanche à l'air (soudure typiquement), par les extrémités 291 de leurs bords pliés de façon à créer entre les deux plaques le conduit 9.

Si on prévoit la forme en tôle ondulée, les ondulations se croisent alors d'une plaque à l'autre, ce qui augmente favorablement les surfaces d'échange.

Un étage 270b est alors créé. Pour créer un étage 270a adjacent, il suffit de placer parallèlement de façon coaxiale, en les superposant, une double plaque 211 et une double plaque 11 et de fixer alors de façon étanche à l'air (soudure typiquement) les deux longueurs d'extrémités 290 de la première sur les deux bords opposés du cadre 31 qui lui font face.

Ainsi, on obtient deux conduits superposés croisés, isolés l'un de l'autre et séparés par une paroi « simple »11.

Si au-dessus de la double plaque 211, on place une autre double plaque 11 orientée comme la précédente et toujours fixée par les extrémités 291, on crée alors les deux sous-conduits superposés précités 7a,7b séparés par la double paroi 211 à MCP 13.

Un tel échangeur/stockeur intégré 210 peut donc figure 8 remplacer celui repéré 1, dans le boîtier isolant 183.

Et ceci pour donc notamment pour deux gestions thermiques intéressantes :
- celle d'un circuit d'huile de boîte de vitesses 213 de véhicule, sur le moteur 8 (schéma figure 10),
- celle d'un circuit d'huile destinée à lubrifier directement ledit moteur 8 à combustion interne (notamment vilebrequin 215, arbre à cames, cylindres 140...) à l'écart de la boîte de vitesses (schéma figure 11).

Considérons dans ces deux cas de l'huile moteur 3 adaptée à circuler dans le circuit d'huile 6.

Dès le lancement du moteur 8, par exemple après que le véhicule ait été parqué 5-7 heures à l'extérieur, sous 5°C, et alors que le matériau 13 de stockage d'énergie thermique de chacune des parois 211 des étages 270a est de nouveau supposé en phase liquide, par exemple vers 80-100°C, l'huile circule dans le circuit 6 via la pompe à huile 217.

A ce moment, correspondant de nouveau à T1 l'étape b) précitée se déroule : l'huile entre (en tant donc que premier fluide 3) par une arrivée 169 (figure 8) dans les étages 270a de l'échangeur thermique 210 (figures 12,13), par exemple vers 6-8°C. Elle y est chauffée par le MCP 13, (échanges 4a figure 12, ici du MCP 13 vers l'huile 3 à travers chaque paroi 11), étant précisé que cet échange huile/MCP peut aussi avoir lieu dans le stockeur 260 de la figure 9, alors que l'accès, pour l'eau du circuit 16, à l'échangeur air/eau 250 - qui peut être un échangeur ATF - est alors interdit, la vanne d'entrée 251 étant fermée.

Ledit moteur de déplacement fonctionnant, de l'eau circule quoi qu'il en soit aussi dans certains conduits et organes du véhicule (voir circuit 16 d'eau figures 1,10,11), via la pompe à eau 143.

A ce moment, l'eau 5 est encore trop froide pour chauffer l'huile. Le thermostat moteur 145 et la vanne 251, alors fermée, la contraignent à ne circuler que dans le moteur, sans donc temporairement de circulation dans le radiateur 18 ni dans l'échangeur 250 (ou l'échangeur/stockeur intégré 210, suivant la version retenue). L'eau monte de fait plus vite en température que l'huile. Une fois qu'elle parvient ainsi à une température supérieure à celle de l'huile, la vanne d'entrée 251 s'ouvre (et, le moment venu, le thermostat 145 la fait passer dans le radiateur 18, s'il est utile de refroidir cette eau fin qu'elle ne dépasse pas environ 90°C, de préférence).

En tant que deuxième fluide 5, l'eau en circulation parvient alors, par une arrivée 169 indépendante de la précédente, dans les étages 270b de l'échangeur/stockeur 210 (ou dans l'échangeur 250, d'un côté de sa paroi interne 11, dans la version échangeur/stockeur dissociés ; figure 9).

L'huile y est donc alors chauffée par l'eau (échanges 4b figure 12, ici de l'eau 5 vers l'huile 3, à travers chaque paroi 11), et possiblement par le matériau 13 de part et d'autre duquel elle circule et qui lui cède de l'énergie à travers les parois 211, tant que le MCP n'est pas passé en-dessous de sa température de changement d'états (de l'ordre donc de 60-70°C dans l'exemple).

La montée en température du moteur se poursuit. L'eau parvient maintenant dans l'échangeur 210 à 80°C. L'huile continue à chauffer par échange avec cette eau 5, à travers les parois 11. L'huile parvient maintenant dans l'échangeur/stockeur 210 à plus 70°C. Elle commence à apporter de la chaleur au matériau 13 qui se recharge alors en énergie thermique, laquelle sera donc disponible pour le prochain fonctionnement du moteur, après un nouvel arrêt.

Continuant à chauffer dans le moteur, la température (t1) de l'huile 3 dépasse maintenant les 90 voire 100°C, donc celle (t2) de l'eau 5; ledit deuxième moment T2 est arrivé. Pour éviter une surchauffe, l'huile transfère alors, dans l'échangeur/stockeur 210 ou dans les dispositifs 250,260, de l'énergie thermique vers l'eau 5 (parois 11), et le matériau 13 (tant que possible). L'étape b) se déroule.

Avec un tel mode de réalisation/fonctionnement :
- on élève plus vite que traditionnellement la température de l'huile moteur (à partir du moment T1),
- on limite la montée en température de l'huile dans le moteur le moment venu (à partir du moment T2),
- on régénère facilement l'énergie thermique du matériau 13,
- l'intérieur de l'échangeur thermique demeure à une température utile d'autant plus longtemps qu'on aura intégré aux parois latérales 165 (ou qu'on les aura doublés avec) un matériau isolant thermique 171 performant.

Dans ce qui précède, et en particulier dans toutes les exemples d'applications, on aura pu noter qu'audit deuxième moment (T2), la température (t1) à laquelle le premier fluide 3 a été chauffé (notamment du fait de sa circulation au contact de certains organes rapidement chauds du moteur 8, tels le bloc moteur, les cylindres 140...) étant supérieure à la température de changement d'états du(de l'un au moins desdits) matériau(x) MCP 13:
- ce matériau à changement d'états se charge en énergie thermique par échange thermique avec le premier fluide 3 dans le stockeur d'énergie thermique 1,210,260,
- et l'étape b) précitée est réalisée.

Bien que les exemples aient été fournis en liaison avec un moteur thermique, des moteurs électriques pour déplacer des véhicules électriques ou hybrides sont utilisables, en complément ou substitution.

## Revendications

1. Procédé d'échange thermique dans lequel :
- a) à un premier moment (T1), dans un stockeur d'énergie thermique, une énergie thermique au moins en partie préalablement accumulée, sous forme de calories, est déchargée vers un premier fluide (3), pour chauffer le premier fluide par cet échange thermique,
- b) puis, à un deuxième moment (T2) postérieur, alors que ledit premier fluide (3) a, lors de l'étape a), été ainsi chauffé à une température supérieure à la température d'un deuxième fluide (5), le deuxième fluide (5) reçoit une énergie calorifique par échange thermique avec ledit premier fluide (3) qui circule alors de l'autre côté d'une première paroi (11) qui empêche le premier et le deuxième fluides (3,5) de se mélanger,
le stockeur d'énergie thermique comprenant au moins un matériau à changement d'états (13) qui, audit premier moment (T1), contient sous forme de calories l'énergie thermique au moins en partie préalablement accumulée qui est déchargée vers le premier fluide (3), ladite énergie thermique préalablement accumulée l'ayant été lors d'un précédent fonctionnement d'un moteur (8), au cours d'un précédent échange thermique avec le premierfluide (3) qui était alors, là et au moment où s'est déroulé ledit échange thermique précédent, à une température supérieure à la température de changement d'états dudit au moins un matériau à changement d'états (13), ledit procédé étant mis en œuvre sur un véhicule pourvu dudit moteur (8), à un croisement entre :
- soit un premier circuit (6) d'air du véhicule, l'air étant alors ledit premier fluide (3), et un second circuit (16) d'eau du véhicule passant par un autre échangeur thermique (18) du véhicule, l'eau étant alors le deuxième fluide (5),
- soit un premier circuit (6) d'huile du véhicule, l'huile étant alors ledit premier fluide (3), et un second circuit (16) d'un autre liquide du véhicule ayant un coefficient de transfert thermique supérieur, ledit autre liquide étant alors le deuxième fluide (5).

2. Procédé selon la revendication 1, où audit deuxième moment (T2), la température à laquelle le premier fluide (3) a été chauffé étant supérieure à la température de changement d'états dudit au moins un matériau à changement d'états (13) :
- ledit au moins un matériau à changement d'états (13) se charge en calories par échange thermique avec le premier fluide (3) dans le stockeur d'énergie thermique,
- et l'étape b) de la revendication 1 est réalisée.

3. Procédé selon l'une quelconque des revendications 1 ou 2 où, dans le stockeur d'énergie thermique (260,1,210), ledit au moins un matériau à changement d'états équipant une deuxième paroi qui sépare, à l'écart de la première paroi, en plusieurs sous-flux un flux d'entrée du premier fluide (3), on fait circuler le long de cette deuxième paroi, lesdits sous-flux (3a,3b) :
- lors de l'étape a), à une température inférieure à la température de changement d'état dudit au moins un matériau à changement d'états (13),
- et, lors de l'étape b) à une température supérieure à la température de changement d'état dudit au moins un matériau à changement d'états.

4. Procédé selon l'une quelconque des revendications précédentes où, à travers la première paroi (11), on place en échange thermique direct, sans interposition de matériau à changement d'états (13), les premier fluide et deuxième fluide (3,5).

5. Procédé selon l'une quelconque des revendications précédentes, où le premier circuit (6) d'huile est un circuit de boîte de vitesses du véhicule.

6. Procédé selon l'une quelconque des revendications précédentes où, audit premier moment (T1) :
- c) lors de l'étape a), de l'huile destinée à lubrifier ledit moteur (8) et circulant dans ledit premier circuit (6) d'huile du véhicule arrive dans le stockeur d'énergie thermique (260,1,210) à une température inférieure à la température de changement d'états dudit au moins un matériau à changement d'états,
- d) et il n'y a alors pas d'échange thermique entre le premier fluide (3) et le deuxième fluide (5), la circulation dudit autre liquide du second circuit (16) vers là où se déroulait ledit échange thermique entre le premier fluide (3) et ledit au moins matériau à changement d'états étant alors interrompue alors que cet autre liquide circule par ailleurs dans le moteur (8) et s'y chauffe, en échange thermique avec des éléments (140,141) dudit moteur.

7. Procédé selon la revendication 6 où, après l'étape c), on réalise l'étape b), en établissant la circulation dudit autre liquide (5) du second circuit (16) vers l'échange thermique avec ledit le premier fluide (3) lorsque la température dudit autre liquide du second circuit est supérieure à la température du premier fluide (3) arrivant pour ledit échange thermique avec ledit autre liquide.

8. Procédé selon la revendication 1 ou 2 où, ladite première paroi (11) étant pourvue dudit au moins un matériau à changement d'états (13), on fait circuler, le long de cette paroi, d'un premier côté le premier fluide (3) et, d'un second côté, le deuxième fluide (5), simultanément, à partir dudit deuxième moment (T2).

9. Procédé selon l'une quelconque des revendications 1,2 ou 8, où le premier circuit (6) est un circuit d'air passant par un turbocompresseur (12) puis par au moins une chambre (14) de combustion du véhicule.

10. Procédé selon la revendication 9 où, audit premier moment (T1), alors que le turbocompresseur (12) est encore arrêté, on préchauffe de l'air arrivant dudit premier circuit (6) d'air vers la(les) chambre(s) de combustion (14), en réalisant l'étape a), via ledit au moins un matériau à changement d'états (13) qui est alors à une température supérieure à sa température de changement d'états.

11. Procédé selon la revendication 9 ou 10 où, lors dudit premier moment (T1), la circulation d'eau du second circuit (16) d'eau vers là où se déroule ledit échange thermique entre l'air et ledit au moins un matériau à changement d'états (13) est interrompue, de sorte qu'il n'y a alors pas d'échange thermique entre le premier fluide (3) et le deuxième fluide (5).

12. Procédé selon les revendications 2, 8 et 9 seules ou en combinaison avec la revendication 11 où, pendant le fonctionnement du turbocompresseur (12), audit deuxième moment (T2), l'étape b) de la revendication 1 est réalisée à travers ladite première paroi (11) pourvue dudit au moins un matériau à changement d'états.

13. Procédé selon l'une quelconque des revendications précédentes, où le véhicule comprend un circuit de refroidissement du moteur (8) qui inclut ledit second circuit (16).

14. Procédé selon l'une quelconque des revendications précédentes où on réalise une succession d'étapes a) et b), dans des étages (27a,270a,27b,270b) d'échanges thermiques respectifs, différents entre eux et empilés pour se succéder suivant une direction (A).

15. Procédé pour conditionner un échangeur thermique (1,210) à capacité de stockage d'énergie thermique et y réaliser des échanges d'énergie thermique, **caractérisé en ce que** :
- on dispose les étages (27a,270a,27b,270b) selon la revendication 14 dans un boîtier isolant (183) comprenant des parois isolantes (165) pourvues de panneaux isolants sous vide contenant au moins un matériau isolant thermique (171),
- et, dans lesdits étages, on réalise le procédé selon l'une quelconque des revendications précédentes.

## Patentansprüche

1. Verfahren zum Wärmeaustausch, wobei:
- a) zu einem ersten Zeitpunkt (T1) in einem Wärmeenergiespeicher zumindest teilweise vorakkumulierte Wärmeenergie in Form einer Wärmemenge an ein erstes Fluid (3) abgegeben wird, um durch diesen Wärmeaustausch das erste Fluid zu erwärmen,
- b) dann zu einem zweiten späteren Zeitpunkt (T2), während das erste Fluid (3) in Schritt a) so auf eine Temperatur erwärmt wurde, die höher ist als die Temperatur eines zweiten Fluids (5), das zweite Fluid (5) Wärmeenergie durch Wärmeaustausch mit dem ersten Fluid (3) erhält, das dann auf der anderen Seite einer ersten Wand (11) strömt, die verhindert, dass sich das erste und das zweite Fluid (3, 5) vermischen,
wobei der Wärmeenergiespeicher zumindest ein Zustandswechselmaterial (13) enthält, das zum ersten Zeitpunkt (T1) als Wärmemenge die zumindest teilweise vorakkumulierte Wärmeenergie enthält, die an das erste Fluid (3) abgegeben wird, wobei die vorakkumulierte Wärmeenergie bei einem vorhergehenden Betrieb eines Motors (8) während eines vorhergehenden Wärmeaustauschs mit dem ersten Fluid (3), das sich dann an der Stelle und zum Zeitpunkt, als der vorhergehende Wärmeaustausch stattfand, bei einer Temperatur befand, die höher war als die Temperatur des Zustandswechsels des zumindest einen Zustandswechselmaterials (13), vorakkumuliert worden ist, wobei das Verfahren durchgeführt wird bei einem mit dem Motor (8) versehenen Fahrzeug an einer Schnittstelle zwischen:
- entweder einem ersten Kreislauf (6) mit Luft vom Fahrzeug, wobei die Luft das erste Fluid (3) ist, und einem zweiten Kreislauf (16) mit Wasser vom Fahrzeug, das durch einen weiteren Wärmetauscher (18) des Fahrzeugs strömt, wobei das Wasser das zweite Fluid (5) ist,
- oder einem ersten Kreislauf (6) mit Öl vom Fahrzeug als erstes Fluid (3) und einem zweiten Kreislauf (16) mit einer weiteren Flüssigkeit vom Fahrzeug mit einem höheren Wärmeübergangskoeffizienten, als zweites Fluid (5).

2. Verfahren nach Anspruch 1, wobei zum zweiten Zeitpunkt (T2), bei dem die Temperatur, auf die das erste Fluid (3) erwärmt wurde, höher ist als die Zustandswechseltemperatur des zumindest einen Zustandswechselmaterials (13):
- das zumindest eine Zustandswechselmaterial (13) durch Wärmeaustausch mit dem ersten Fluid (3) im Wärmeenergiespeicher eine Wärmemenge aufnimmt,
- und Schritt (b) von Anspruch 1 ausgeführt wird.

3. Verfahren nach einem der Ansprüche 1 oder 2, wobei in dem Wärmeenergiespeicher (260, 1, 210) eine mit dem zumindest einen Zustandswechselmaterial versehene zweite Wand in einem Abstand von der ersten Wand einen Zulaufstrom des ersten Fluids (3) in mehrere Teilströme trennt und die Teilströme (3a, 3b) entlang dieser zweiten Wand strömen, und zwar:
- in Schritt a) bei einer Temperatur, die niedriger ist als die Temperatur des Zustandswechsels des zumindest einen Zustandswechselmaterials (13),
- und in Schritt b) bei einer Temperatur, die höher ist als die Temperatur des Zustandswechsels des zumindest einen Zustandswechselmaterials.

4. Verfahren nach einem der vorstehenden Ansprüche, wobei durch die erste Wand (11) hindurch das erste Fluid und das zweite Fluid (3, 5) in direktem Wärmeaustausch ohne Zwischenschaltung von Zustandswechselmaterial (13) angeordnet werden.

5. Verfahren nach einem der vorstehenden Ansprüche, wobei der erste Kreislauf (6) mit Öl ein Getriebekreislauf des Fahrzeugs ist.

6. Verfahren nach einem der vorstehenden Ansprüche, wobei zum ersten Zeitpunkt (T1):
- c) in Schritt a) Öl, das dazu bestimmt ist, den Motor (8) zu schmieren und das in dem ersten Ölkreislauf (6) des Fahrzeugs strömt, in den Wärmeenergiespeicher (260, 1, 210) mit einer Temperatur zuströmt, die niedriger ist als die Zustandswechseltemperatur des zumindest einen Zustandswechselmaterials,
- d) und dann kein Wärmeaustausch zwischen dem ersten Fluid (3) und dem zweiten Fluid (5) erfolgt, wobei die Strömung der weiteren Flüssigkeit vom zweiten Kreislauf (16) zu der Stelle, wo der Wärmeaustausch zwischen dem ersten Fluid (3) und dem zumindest einen Zustandswechselmaterial erfolgt ist, dann unterbrochen wird, während diese weitere Flüssigkeit ferner in den Motor (8) strömt und sich dort im Wärmeaustausch mit Elementen (140, 141) des Motors erwärmt.

7. Verfahren nach Anspruch 6, wobei nach Schritt c) Schritt b) ausgeführt wird, indem die Strömung der weiteren Flüssigkeit (5) vom zweiten Kreislauf (16) zum Wärmeaustausch mit dem ersten Fluid (3) hin hergestellt wird, wenn die Temperatur der weiteren Flüssigkeit des zweiten Kreislaufs höher ist als die Temperatur des ersten Fluids (3), das für den Wärmeaustausch mit der weiteren Flüssigkeit zuströmt.

8. Verfahren nach Anspruch 1 oder 2, wobei bei der mit dem zumindest einen Zustandswechselmaterial (13) versehenen ersten Wand (11) das erste Fluid (3) entlang dieser Wand auf einer ersten Seite und gleichzeitig das zweite Fluid (3) auf einer zweiten Seite ab dem zweiten Zeitpunkt (T2) strömt.

9. Verfahren nach einem der Ansprüche 1, 2 oder 8, wobei der erste Kreislauf (6) ein Kreislauf mit Luft ist, die durch einen Turbolader (12) und dann durch zumindest einen Verbrennungsraum (14) des Fahrzeugs verläuft.

10. Verfahren nach Anspruch 9, wobei zum ersten Zeitpunkt (T1) während der Turbolader (12) noch ausgeschaltet ist, Luft aus dem ersten Luftkreislauf (6) zu dem bzw. den Verbrennungsräumen (14) durch Ausführung von Schritt a) über das zumindest eine Zustandswechselmaterial (13) vorgewärmt wird, das sich dann auf einer Temperatur bindet, die höher ist als seine Zustandswechseltemperatur.

11. Verfahren nach Anspruch 9 oder 10, wobei zu dem ersten Zeitpunkt (T1) die Wasserströmung von dem zweiten Wasserkreislauf (16) zu der Stelle, wo der Wärmeaustausch zwischen der Luft und dem zumindest einen Zustandswechselmaterial (13) erfolgt, unterbrochen wird, so dass dann kein Wärmeaustausch zwischen dem ersten Fluid (3) und dem zweiten Fluid (5) erfolgt.

12. Verfahren nach den Ansprüchen 2, 8 und 9 allein oder in Kombination mit Anspruch 11, wobei während des Betriebs des Turboladers (12) zum zweiten Zeitpunkt (T2) der Schritt b) nach Anspruch 1 durch die erste Wand (11) hindurch erfolgt, die mit dem zumindest einen Zustandswechselmaterial versehen ist.

13. Verfahren nach einem der vorstehenden Ansprüche, wobei das Fahrzeug einen Kühlkreislauf zum Kühlen des Motors (8) enthält, der den zweiten Kreislauf (16) umfasst.

14. Verfahren nach einem der vorstehenden Ansprüche, wobei eine Abfolge von Schritten a) und b) in Stufen (27a, 270a, 27b, 270b) von jeweiligen Wärmeaustauschvorgängen ausgeführt wird, die sich voneinander unterscheiden und so gestapelt sind, dass sie in einer Richtung (A) aufeinander folgen.

15. Verfahren zur Konditionierung eines Wärmetauschers (1, 210) mit einem Speichervermögen für Wärmeenergie und zur Durchführung von Wärmeenergieaustauschvorgängen darin, **dadurch gekennzeichnet, dass**:
- die Stufen (27a, 270a, 27b, 270b) nach Anspruch 14 in einem Isoliergehäuse (183) angeordnet werden, das Isolierwände (165) enthält, die mit Vakuum-Isolations-Paneelen versehen sind, die zumindest ein thermisch isolierendes Material (171) enthalten,
- und in diesen Stufen das Verfahren nach einem der vorstehenden Ansprüche durchgeführt wird.

## Claims

1. A method for thermal exchange, wherein:
- a) at a first point in time (T1), in a thermal energy storing device, at least part of the thermal energy previously accumulated in a form of calories is discharged to a first fluid (3), to heat the first fluid by this thermal exchange,
- b) subsequently, at a second later point in time (T2), when said first fluid (3) has, during stage a), been heated to a temperature higher than the temperature of a second fluid (5), the second fluid (5) receives heat energy by thermal exchange with said first fluid (3) which then circulates on an other side of a first wall (11) that prevents the first fluid and second fluid (3,5) from mixing,
the thermal energy storing device comprising at least one phase-change material (13), which, at said first point in time (T1), contains at least part of the thermal energy previously accumulated in the form of calories which is discharged to the first fluid (3), said thermal energy previously accumulated having been stored in the course of a previous operation of an engine (8), during a previous thermal exchange with the first fluid (3) which was, where and when the previous thermal exchange took place, at a temperature higher than the change-of-state temperature of said at least one phase-change material (13), said method being implemented on a vehicle equipped with said engine (8), at a crossroads between:
- either a first air circuit (6) of the vehicle, said air operating as the first fluid (3), and a second water circuit (16) of the vehicle flowing through another thermal exchanger (18) of the vehicle, said water operating as the second fluid (5),
- or a first oil circuit (6) of the vehicle, said oil operating as the first fluid (3), and a second circuit (16) of another liquid of the vehicle having a thermal transfer coefficient higher than the thermal transfer coefficient of said oil, said another liquid operating as the second fluid (5).

2. Method according to claim 1, wherein at said second point in time (T2), the temperature to which the first fluid (3) has been heated being higher than the change-of-state temperature of said at least one phase-change material (13):
- said at least one phase-change material (13) is loaded with calories by thermal exchange with the first fluid (3) in the thermal energy store,
- and the stage b) of claim 1 is performed.

3. Method according to any one of claims 1 or 2, wherein in the thermal energy storing device (260,1,210), said at least one phase-change material is provided to a second wall that separates, away from the first wall, an inlet flow of the first fluid (3) into several sub-flows, said sub-flows are circulated along this second wall, said sub-flows (3a,3b):
- during stage a), at a temperature below the change-of-state temperature of said at least one phase-change material (13),
- and during stage b), at a temperature above the change-of-state temperature of said at least one phase-change material.

4. Method according to any one of the preceding claims wherein, through the first wall (11), the first and second fluids (3,5) are placed in direct thermal exchange there between, without interposition of phase-change material (13).

5. Method according to any one of the preceding claims, wherein the first oil circuit (6) is a gearbox circuit of the vehicle.

6. Method according to any one of the preceding claims, wherein, at the first point in time (T1 ):
- c) during stage a), oil adapted to lubricate said engine (8) and circulating in said first oil circuit (6) of the vehicle arrives in the thermal energy storing device (260,1,210) at a temperature lower than the change-of-state temperature of said at least one phase-change material,
- d) and there is then no thermal exchange between the first fluid (3) and the second fluid (5), the circulation of said another liquid of the second circuit (16) towards where said thermal exchange between said first fluid (3) and said at least one phase-change material operated being further interrupted, whereas this another liquid furthermore circulates elsewhere in the engine (8) where it increases in temperature, by thermal exchange with elements (140,141) of said engine.

7. Method according to claim 6, wherein, following stage c), stage b) is performed, by establishing circulation of said another liquid (5) from the second circuit (16) towards said thermal exchange with said first fluid (3) when the temperature of said another liquid in the second circuit is higher than the temperature of the first fluid (3) arriving for said thermal exchange with said another liquid.

8. Method according to claim 1 or 2 wherein, said first wall (11) being provided with said at least one phase-change material (13), the first fluid (3) is circulated along the first side and the second fluid (5) along the second side of said first wall, simultaneously, from said second point in time (T2).

9. Method according to any one of claims 1,2 or 8, wherein the first circuit (6) is an air circuit passing through a turbocharger (12) and subsequently through at least one engine combustion chamber (14) of the vehicle.

10. Method according to claim 9 wherein, at said first point in time (T1) when the turbocharger (12) is not yet running, the air arriving from said first air circuit (6) and flowing towards said at least one engine combustion chamber (14) is preheated, by performing stage a), via said at least one phase-change material (13), which is then at a temperature higher than its change-of-state temperature.

11. Method according to claim 9 or 10 wherein, at said first point in time (T1), the circulation of water from the second water circuit (16) towards the point at which said thermal exchange between the air and said at least one phase-change material (13) is interrupted, so that no thermal exchange then exists between the first fluid (3) and second fluid (5).

12. Method according to claims 2, 8 and 9 alone or in combination with claim 11 wherein, during operation of the turbocharger (12), at said second point in time (T2), stage b) of claim 1 is performed through said first wall (11) provided with said PCM material.

13. Method according to any one of the preceding claims, wherein the vehicle comprises a cooling circuit for cooling the engine (8) which includes said second circuit (16).

14. Method according to any one of the preceding claims, wherein a succession of stages a) and b) is carried out in respective thermal exchange stages (27a,270a,27b,270b), different from each other and stacked in succession, along a direction (A).

15. Method for conditioning a thermal exchanger (1,210) having a thermal energy storage capacity and for carrying out thermal energy exchanges therein, **characterised in that**:
- the thermal exchange stages (27a,270a,27b,270b) according to claim 14 are arranged in an insulating jacket (183) comprising insulating walls (165) provided with vacuum insulated panels containing at least one thermally insulating material (171),
- and, in said thermal exchange stages, the method according to any one of preceding claims is performed.
